# EUROPÄISCHE PATENTSCHRIFT

(11) **EP 3 483 067 B1**
(45) Veröffentlichungstag und Bekanntmachung des Hinweises auf die Patenterteilung: **14.07.2021**
(21) Anmeldenummer: 18205069.0
(22) Anmeldetag: 08.11.2018
(51) Int. Cl.: B64D 11/04, B64D 13/06

(54) **KÜHLANORDNUNG FÜR EINE BORDKÜCHE UND BORDKÜCHE**
COOLING ARRANGEMENT FOR A GALLEY AND GALLEY
DISPOSITIF DE REFROIDISSEMENT POUR UNE CUISINE DE BORD ET CUISINE DE BORD

(30) Priorität: 14.11.2017 DE 102017126693
(43) Veröffentlichungstag der Anmeldung: 15.05.2019
(73) Patentinhaber: Airbus Operations GmbH, 21129 Hamburg (DE)
(72) Erfinder: Lohse, Ekkehard, 21129 Hamburg (DE); Trümper, Torsten, 21129 Hamburg (DE)
(74) Vertreter: Schicker, Silvia

(56) Entgegenhaltungen:
- DE-A1- 4 340 316
- DE-A1-102015 210 268
- US-A1- 2007 095 521
- US-A1- 2015 007 600
- US-A1- 2015 089 968

## Beschreibung

Die Erfindung betrifft eine Bordküche mit einer Kühlanordnung, die für eine Installation in einem Verkehrsmittel, insbesondere einem Flugzeug, vorgesehen ist.

Moderne Verkehrsflugzeuge sind üblicherweise mit beispielsweise aus der DE 10 2006 023 047 B4 bzw. der US 7,780,114 B2 bekannten Bordküchen, sogenannten Galleys, ausgestattet. In der Regel sind die Galleys in den Türeingangsbereichen der Flugzeugkabine installiert und weisen einen Korpus mit einem durch eine Arbeitsplatte begrenzten Unterbau sowie oberhalb der Arbeitsplatte angeordneten Oberfächern auf. In den Oberfächern der Galley sind üblicherweise Küchengeräte, wie z.B. Kaffeemaschinen, Wasserkocher, Öfen, etc. sowie Getränke und Lebensmittel untergebracht. Im Unterbau der Galley ist dagegen ein Trolleyfach zur Aufnahme von fahrbaren Trolleys vorgesehen, die mit zur Ausgabe an die Passagiere an Bord des Flugzeugs vorgesehenen Gegenständen, wie z.B. Getränken und Lebensmitteln, beladen sind.

Aus der DE 10 2015 210 268 A1 und der WO 2016/193378 A1 ist ein Kühlsystem bekannt, das eine im Bereich einer Seitenwand einer Bordküche installierte oder in eine Seitenwand der Bordküche integrierte Kühlanordnung umfasst. Alternativ ist die Kühlanordnung im Bereich einer Zwischenwand installiert oder in eine Zwischenwand integriert, die einen Unterbau der Bordküche in einen ersten und einen zweiten Abschnitt unterteilt. Fluidleitungen der Kühlanordnung, die von einem Kühlmedium durchströmte Wärmetauscher der Kühlanordnung mit einem jeweiligen Fluid thermisch koppeln, können Abschnitte umfassen, die in einer Arbeitsplatte der Bordküche integriert sind. Die Kühlanordnung erzeugt ein gekühltes Fluid, beispielsweise Luft, das durch einen Auslass in einen bodennahen Bereich eines Unterbaus der Bordküche geleitet wird und über einen in einer Unterseite der Arbeitsplatte ausgebildeten Fluideinlass aus dem Unterbau in die Kühlvorrichtung rezirkuliert wird.

Bei der in der DE 10 2015 210 268 A1 und der WO 2016/193378 A1 beschriebenen Kühlanordnung sind alle wesentlichen funktionalen Komponenten der Kühlanordnung, d.h. ein Kühlkreislauf, ein Verdampfer, ein Kompressor, ein Kondensator und elektronische Komponenten zur Steuerung des Betriebs der Kühlanordnung in einem gemeinsamen Gehäuse angeordnet. Bei dieser voll integrierten Architektur der Kühlanordnung kann auf mechanische Schnittstellen zwischen den Komponenten der Kühlanordnung verzichtet werden. Die Kühlanordnung hat jedoch einen vergleichsweise hohen Einbauraumbedarf.

Der Erfindung liegt die Aufgabe zugrunde, eine einbauraumoptimierte und flexibel einsetzbare Kühlanordnung für eine zur Installation in einem Verkehrsmittel vorgesehene Bordküche bereitzustellen. Ferner ist die Erfindung auf die Aufgabe gerichtet, eine mit einer derartigen Kühlanordnung ausgestattete Bordküche anzugeben.

Diese Aufgabe wird durch eine Bordküche mit den Merkmalen des Anspruchs 1 gelöst.

Eine Kühlanordnung für eine zur Installation in einem Verkehrsmittel vorgesehene Bordküche umfasst einen von einem Kühlmedium, beispielsweise einem zweiphasigen Kältemittel, durchströmbaren Kühlkreislauf. In dem Kühlkreislauf sind ein Kondensator und ein Verdampfer angeordnet. Beim Durchströmen des Verdampfers nimmt das den Kühlkreislauf durchströmende Kühlmedium Wärme von einem zu kühlenden Fluid auf und wird dabei vom flüssigen in den gasförmigen Aggregatzustand überführt. Im Gegensatz dazu wird das den Kühlkreislauf durchströmende Kühlmedium beim Durchströmen des Kondensators durch Abgabe von Wärmeenergie an ein Wärme aufnehmendes Fluid gekühlt und vom gasförmigen wieder in den flüssigen Aggregatzustand zurück konvertiert.

Der Verdampfer kann einen Wärmetauscher umfassen, der dazu eingerichtet ist, das den Kühlkreislauf durchströmende Kühlmedium in Wärmekontakt mit dem zu kühlenden Fluid zu bringen. Bei dem zu kühlenden Fluid kann es sich um eine Flüssigkeit oder um ein Gas, insbesondere Luft handeln. In ähnlicher Weise kann auch der Kondensator einen Wärmetauscher umfassen, der dazu eingerichtet ist, das den Kühlkreislauf durchströmende Kühlmedium in Wärmekontakt mit dem Wärme aufnehmenden Fluid zu bringen. Bei dem Wärme aufnehmenden Fluid kann es sich, ähnlich wie bei dem zu kühlenden Fluid, um eine Flüssigkeit oder um ein Gas, insbesondere Luft handeln.

Der Kondensator ist separat von dem Verdampfer in einem Kondensatorgehäuse aufgenommen und in einem ersten Einbauraum angeordnet, der dazu eingerichtet ist, einen ersten Teilbereich der Bordküche zu bilden. Der Verdampfer ist separat von dem Kondensator in einem separat von dem Kondensatorgehäuse ausgebildeten Verdampfergehäuse aufgenommen und in einem zweiten Einbauraum eingeordnet, der dazu eingerichtet ist, einen zweiten Teilbereich der Bordküche zu bilden. Der zur Installation des Verdampfers dienende zweite Einbauraum ist vorzugsweise dazu eingerichtet, einen in unmittelbarer Nachbarschaft zu einer zu kühlenden Einrichtung angeordneten Teilbereich der Bordküche zu bilden. Im Gegensatz dazu bildet der erste Einbauraum einen beliebigen, d.h. einen von einer zu kühlenden Einrichtung räumlich getrennten Teilbereich der Bordküche.

Durch die Trennung der Kühlanordnung in eine "Kondensatoreineit" und eine separat davon ausgebildete "Verdampfereinheit" werden zwei separat voneinander ausgebildete Einheiten mit jeweils geringerem Einbauraumbedarf als die gesamte Kühlanordnung geschaffen, die an räumlich voneinander getrennten Positionen in der Bordküche installiert werden können. Dadurch kann der in einer Bordküche vorhandene begrenzte Einbauraum optimal ausgenutzt werden. Darüber hinaus ist die Kühlanordnung besonders flexibel einsetzbar, da der den Verdampfer aufnehmende zweite Einbauraum, je nach Bedarf, verschiedene Teilbereiche der Bordküche bilden kann. Insbesondere kann der Verdampfer benachbart zu einer zu kühlenden Einrichtung der Bordküche installiert werden, während der Kondensator einen an anderer Stelle der Bordküche vorhandenen Einbauraum beanspruchen kann.

In einer bevorzugten Ausführungsform umfasst die Kühlanordnung ferner einen in dem Kühlkreislauf der Kühlanordnung angeordneten Kompressor. Vorzugsweise ist der Kompressor stromaufwärts des Kondensators in dem Kühlkreislauf positioniert. Der Begriff "stromaufwärts" bezieht sich hier auf die Strömungsrichtung des Kühlmediums durch den Kühlkreislauf.

Darüber hinaus kann die Kühlanordnung eine erste Fördereinrichtung umfassen, die dazu eingerichtet ist, ein erstes Fluid durch den Kondensator zu fördern, das dazu eingerichtet ist, Wärme von dem den Kondensator durchströmenden Kühlmedium aufzunehmen. Wie bereits erwähnt, kann das erste Fluid eine Flüssigkeit oder ein Gas sein. Die Verwendung eines flüssigen ersten Fluids ist beispielsweise dann vorteilhaft, wenn die Kühlanordnung in ein übergeordnetes Wärmemanagementsystem integriert werden soll. Dementsprechend kann die erste Fördereinrichtung, je nach Bedarf, in Form einer Pumpe oder in Form eines Ventilators ausgebildet sein.

Ferner kann die Kühlanordnung eine zweite Fördereinrichtung umfassen, die dazu eingerichtet ist, ein zweites Fluid durch den Verdampfer zu fördern, das dazu eingerichtet ist, Wärme an das den Verdampfer durchströmenden Kühlmedium abzugeben. Ähnlich wie das erste Fluid, kann auch das zweite Fluid eine Flüssigkeit oder ein Gas sein, so dass auch die zweite Fördereinrichtung, je nach Bedarf, in Form einer Pumpe oder in Form eines Ventilators ausgebildet sein kann.

Des Weiteren kann die Kühlanordnung ein Ventil umfassen, das dazu eingerichtet ist, einen Volumenstrom des Kühlmediums durch den Kühlkreislauf der Kühlanordnung zu steuern. Das Ventil kann beispielsweise in Form eines Expansionsventils ausgebildet sein. Durch eine entsprechende Steuerung des Ventils kann die Zufuhr von Kühlmedium zu dem Verdampfer und damit die Kühlleistung des Verdampfers wie gewünscht gesteuert werden.

In einer bevorzugten Ausführungsform der Kühlanordnung ist der Kompressor in dem Kondensatorgehäuse angeordnet. Zusätzlich oder alternativ dazu kann auch die erste Fördereinrichtung in dem Kondensatorgehäuse angeordnet sein. Die zweite Fördereinrichtung kann in dem Verdampfergehäuse angeordnet sein. Ferner kann das insbesondere in Form eines Expansionsventils ausgebildete Ventil zur Steuerung des Volumenstroms des Kühlmediums durch den Kühlkreislauf der Kühlanordnung in dem Verdampfergehäuse angeordnet sein. Die Kühlanordnung ist dann de facto in zwei separat voneinander ausgebildete und separat voneinander verbaubare Einheiten unterteilt, in denen jeweils funktional zusammenhängende Elemente der Kühlanordnung zusammengefasst sind.

Die Kühlanordnung kann eine Mehrzahl von in dem Kühlkreislauf der Kühlanordnung angeordneten Verdampfern umfassen. Diese Verdampfer können beispielsweise dazu dienen, von verschiedenen zu kühlenden Einrichtungen der Bordküche Wärme aufzunehmen und abzuführen. Hierzu können die Verdampfer entsprechend dimensioniert und optimiert sein. Die Verdampfer sind vorzugsweise jeweils separat von dem Kondensator in dem zweiten Einbauraum angeordnet. Jedem Verdampfer ist vorzugsweise ein Ventil zugeordnet, das dazu eingerichtet ist, einen Volumenstrom des Kühlmediums zu dem Verdampfer und damit die Kühlleistung des Verdampfers zu steuern. Die den einzelnen Verdampfern zugeordneten Ventile sind vorzugsweise in Form von Expansionsventilen ausgebildet.

Grundsätzlich ist es denkbar, die Verdampfer der Kühlanordnung in einem gemeinsamen Verdampfergehäuse anzuordnen. Vorzugsweise ist jedoch jeder Verdampfer der Kühlanordnung in einem separaten Verdampfergehäuse aufgenommen. In dieses Verdampfergehäuse kann auch das dem Verdampfer zugeordnete Ventil integriert sein. Ferner können die entweder in einem gemeinsamen Verdampfergehäuse oder in separaten Verdampfergehäusen aufgenommenen Verdampfer der Kühlanordnung in einem gemeinsamen zweiten Einbauraum angeordnet sein. Vorzugsweise ist der der zweite Einbauraum jedoch in eine Mehrzahl von zweiten Einbauteilräumen unterteilt ist, die jeweils separat voneinander ausgebildet und zur Aufnahme mindestens eines Verdampfers, vorzugsweise mindestens eines in einem separaten Verdampfergehäuse aufgenommenen Verdampfers geeignet sind.

Die zweiten Einbauteilräume sind dazu eingerichtet, räumlich voneinander getrennte Teilbereiche der Bordküche zu bilden. Die Kühlanordnung kann dann in vorteilhafter Weise dazu verwendet werden, in verschiedenen Bereichen der Bordküche vorhandene Wärme erzeugende Einrichtungen zu kühlen, wobei darauf verzichtet werden kann, jeder Wärme erzeugende Einrichtung eine komplette Kühlanordnung zuzuordnen. Vielmehr ist es lediglich erforderlich, die Kühlanordnung mit so vielen Verdampfern zu versehen, dass eine ausreichende Kühlung aller Wärme erzeugenden Einrichtungen gewährleistet werden kann.

In einer bevorzugten Ausführungsform umfasst die Kühlanordnung ferner eine Steuereinheit zur Steuerung des Betriebs der Kühlanordnung. Die Steuereinheit ist vorzugsweise in dem Kondensatorgehäuse angeordnet. Dadurch kann die Steuereinheit räumlich von einer durch den Verdampfer der Kühlanordnung zu kühlenden Einrichtung getrennt und dadurch vor der von der zu kühlenden Einrichtung erzeugten Wärme geschützt werden.

Die Steuereinheit einer mehrere Verdampfer aufweisenden Kühlanordnung ist vorzugsweise dazu eingerichtet, eine Kühlleistung der Verdampfer unabhängig voneinander zu steuern. Beispielsweise kann die Steuereinheit dazu eingerichtet sein, den einzelnen Verdampfern zugeordneten Ventile und damit den den Verdampfern zugeführten Kühlmediumvolumenstrom zu steuern. Bei einer derart ausgestalteten Kühlanordnung können für die verschiedenen zu kühlenden Einrichtungen verschiedene Zieltemperaturen festgelegt werden. Ferner kann auf einen unterschiedlichen Kühlbedarf der zu kühlenden Einrichtungen reagiert werden.

Im Bereich einer Außenfläche des Kondensatorgehäuses kann mindestens ein Kühlkreislaufanschluss zum Anschluss des in dem Kondensatorgehäuse aufgenommenen Kondensators an den Kühlkreislauf der Kühlanordnung vorgesehen sein. Vorzugsweise sind ein Kondensatorzuleitungsanschluss zur Zufuhr des beim Durchströmen des Verdampfers erwärmten Kühlmediums zu dem Kondensator und ein Kondensatorableitungsanschluss zur Abfuhr des beim Durchströmen des Kondensators gekühlten Kühlmediums von dem Kondensator vorgesehen. Bei der Außenfläche des Kondensatorgehäuses kann es sich beispielsweise um eine rückwärtige Außenfläche des Kondensators handeln.

Zusätzlich oder alternativ dazu kann im Bereich einer Außenfläche des Kondensatorgehäuses ein elektrischer Anschluss zum Anschluss der in dem Kondensatorgehäuse aufgenommenen Steuereinheit an ein elektrisches Netz angeordnet sein. Der elektrische Anschluss stellt vorzugsweise eine Verbindung der Steuereinheit zu einem elektrischen Versorgungsnetz her. Ferner können der Steuereinheit über den elektrischen Anschluss Signale, beispielsweise Signale, die für den Betriebszustand der Kühlanordnung und/oder einer zu kühlenden Einrichtung charakteristisch sind, zugeführt werden. Darüber hinaus können über den elektrischen Anschluss Steuersignale der Steuereinheit ausgegeben werden.

Eine Bordküche gemäß Anspruch 1 umfasst eine oben beschriebene Kühlanordnung.

Gemäß Anspruch 1 bildet der erste Einbauraum der Kühlanordnung einen Bereich eines oberhalb einer Arbeitsplatte der Bordküche angeordneten Bordküchenfachs. Insbesondere bildet der erste Einbauraum einen rückwärtigen Bereich des oberhalb der Arbeitsplatte der Bordküche angeordneten Bordküchenfachs. Bei dem Bordküchenfach handelte sich vorzugsweise um ein ungekühltes Standardbordküchenfach.

Ferner kann die Bordküche ein unterhalb der Arbeitsplatte der Bordküche angeordnetes, zu kühlendes Trolleyfach umfassen. Der zweite Einbauraum oder ein Einbauteilraum des zweiten Einbauraums der Kühlanordnung, in dem ein Verdampfergehäuse mit einem darin aufgenommenen Verdampfer angeordnet ist, kann benachbart zu dem Trolleyfach angeordnet oder in das Trolleyfach integriert sein. In dem Trolleyfach untergebrachte und mit zu kühlenden Lebensmitteln beladene Trolleys können dann mittels des Verdampfers beispielsweise nach dem Air-through-Prinzip und/oder dem Air-over-Prinzip gekühlt werden.

Alternativ dazu kann die Bordküche ein oberhalb der Arbeitsplatte der Bordküche angeordnetes, zu kühlendes Bordküchenfach umfassen. Der zweite Einbauraum oder ein Einbauteilraum des zweiten Einbauraums der Kühlanordnung, in dem ein Verdampfergehäuse mit einem darin aufgenommenen Verdampfer angeordnet ist, kann benachbart zu dem Bordküchenfach angeordnet oder in das Bordküchenfach integriert sein. Bei dem zu kühlenden Bordküchenfach kann es sich beispielsweise um ein Weinkühlfach oder ein zur Aufnahme von zu kühlenden Lebensmitteln vorgesehenes Fach handeln. Dem zu kühlenden Bordküchenfach kann beispielsweise durch den Verdampfer gekühlte und mittels der zweiten Fördereinrichtung durch den Verdampfer geförderte Luft zugeführt werden. Dadurch wird sogar eine effektive Kühlung von Bordküchenfächern ohne Tür ermöglicht.

Eine bevorzugte Ausführungsform der Erfindung wird nun anhand der beigefügten, schematischen Zeichnungen näher erläutert, von denen
- Figur 1: eine schematische Ansicht einer mit einer Kühlanordnung ausgestatteten Flugzeugbordküche zeigt und
- Figur 2: eine Querschnittsansicht eines Kondensatorgehäuses der Kühlanordnung zeigt.

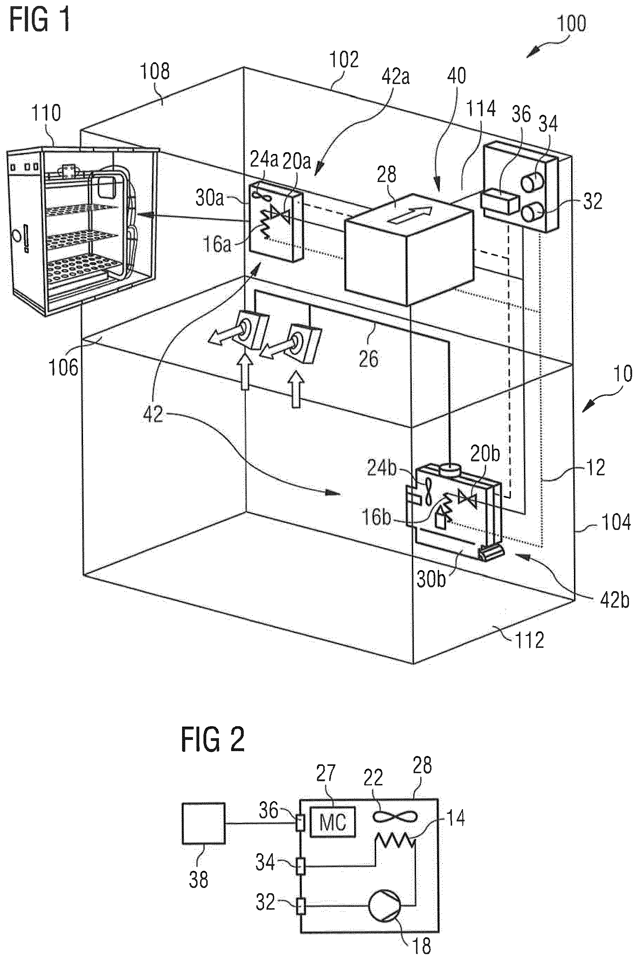

Figur 1 zeigt eine Bordküche 100, die insbesondere zur Installation in einer Passagierkabine eines Verkehrsflugzeugs geeignet ist. Die Bordküche 100 umfasst einen Korpus 102 mit einem Unterbau 104 sowie einem durch eine Arbeitsplatte 106 von dem Unterbau 104 getrennten Oberbau 108. In dem Oberbau 108 sind mehrere Oberfächer 110 angeordnet, in denen Küchengeräte, wie z.B. Kaffeemaschinen, Wasserkocher, etc. sowie Getränke und Lebensmittel untergebracht werden können. Die Detailansicht in Figur 1 veranschaulicht beispielhaft ein in Form eines türlosen Weinkühlfachs ausgebildetes Oberfach 110. Im Unterbau 104 der Bordküche 100 ist dagegen ein Trolleyfach 112 zur Aufnahme von fahrbaren Trolleys angeordnet, die mit zur Ausgabe an die Passagiere in der Passagierkabine des Verkehrsflugzeugs vorgesehenen Gegenständen, wie z.B. Getränken und Lebensmitteln beladen sind.

Ein Kühlsystem 10 dient dazu, das im Unterbau 104 der Bordküche 100 angeordnete Trolleyfach 112 sowie das im Oberbau 108 der Bordküche 100 angeordnete Oberfach 110 zu kühlen. Die Kühlanordnung 10 umfasst einen Kühlkreislauf 12 der von einem zweiphasigen Kühlmittel durchströmt wird. In dem Kühlkreislauf 12 sind ein Kondensator 14, ein erster Verdampfer 16a und ein zweiter Verdampfer 16b angeordnet. Beim Durchströmen der Verdampfer 16a, 16b nimmt das den Kühlkreislauf 12 durchströmende Kühlmedium Wärme von einem zu kühlenden Fluid auf und wird dabei vom flüssigen in den gasförmigen Aggregatzustand überführt. Im Gegensatz dazu wird das den Kühlkreislauf 12 durchströmende Kühlmedium beim Durchströmen des Kondensators 14 durch Abgabe von Wärmeenergie an ein Wärme aufnehmendes Fluid gekühlt und vom gasförmigen wieder in den flüssigen Aggregatzustand zurück konvertiert.

Stromaufwärts des Kondensators 14 ist in dem Kühlkreislauf 12 ein Kompressor 18 angeordnet. Ferner ist jedem Verdampfer 16a, 16b ein in Form eines Expansionsventils ausgebildetes und stromaufwärts des jeweiligen Verdampfers 16a, 16b in dem Kühlkreislauf 12 angeordnetes Steuerventil 20a, 20b zugeordnet, das dazu dient, den Kühlmediumvolumenstrom durch den Kühlkreislauf 12 in Richtung des Verdampfers 16a, 16b und dadurch die Kühlleistung des Verdampfers 16a, 16b zu steuern.

Der Kondensator 14 umfasst einen Wärmetauscher, der das dem Kondensator 14 von dem Kompressor 18 zugeführte komprimierte Kühlmedium mit einem Wärme aufnehmenden ersten Fluid, hier Luft, in Wärmekontakt bringt. Zur Förderung des ersten Fluids durch den Kondensator 14 ist dem Kondensator eine in Form eines Ventilators ausgebildete erste Fördereinrichtung 22 zugeordnet. In ähnlicher Weise umfasst jeder der Verdampfer 16a, 16b einen Wärmetauscher, der ein zu kühlendes zweites Fluid, hier Luft, mit dem den Kühlkreislauf 12 durchströmenden Kühlmedium in Wärmekontakt bringt. Zur Förderung des zweiten Fluids durch die Verdampfer 16a, 16b ist jedem Verdampfer 16a, 16b eine in Form eines Ventilators ausgebildete zweite Fördereinrichtung 24a, 24b zugeordnet.

Der erste Verdampfer 16a dient dazu, Luft, die von der dem ersten Verdampfer 16a zugeordneten zweiten Fördereinrichtung 24a durch den ersten Verdampfer 16a und anschließend in das in Form eines Weinkühlfachs ausgebildete Oberfach 110 gefördert wird, zu kühlen. Der zweite Verdampfer 16b ist dagegen dazu vorgesehen, Luft zu kühlen, die von der dem zweiten Verdampfer 16b zugeordneten zweiten Fördereinrichtung 24b durch den zweiten Verdampfer 16b und anschließend durch einen Kühlluftzufuhrkanal 26 und entsprechende Kühlluftauslassöffnungen 28 in das Trolleyfach 112 gefördert wird.

Falls gewünscht, kann beim Durchströmen des Oberfachs 110 und/oder des Trolleyfachs 112 erwärmte Kühlluft in Richtung des Kondensators 14 rezirkuliert und von der ersten Fördereinrichtung 22 als das Wärme aufnehmende erste Fluid durch den Kondensator 14 gefördert werden. Alternativ dazu ist es jedoch auch denkbar, die beim Durchströmen des Oberfachs 110 und/oder des Trolleyfachs 112 erwärmte Kühlluft in die Umgebung der Bordküche 100 abzuführen. Die als das Wärme aufnehmende erste Fluid durch den Kondensator 14 zu leitende Luft kann dann direkt der Umgebung der Bordküche 100 oder einer anderen Quelle entnommen werden.

Schließlich umfasst die Kühlanordnung 10 eine den Betrieb der Kühlanordnung 10 steuernde Steuereinheit 27. Die Steuereinheit 27 ist dazu eingerichtet für den Betriebszustand der Kühlanordnung 10 sowie den Kühlbedarf des Oberfachs 110 und des Trolleyfachs 112 charakteristische Signale zu empfangen und die Kühlleistung der Verdampfer 16a, 16b in Abhängigkeit dieser Signale zu steuern. Insbesondere ist die Steuereinheit 27 dazu eingerichtet, durch entsprechende Steuerung der Ventile 20a, 20b den Kühlmediumvolumenstrom zu den Verdampfern 16a, 16b und damit die Kühlleistung der Verdampfer 16a, 16b unabhängig voneinander zu steuern. Dadurch können für das Oberfach 110 und das Trolleyfach 112 verschiedene Zieltemperaturen festgelegt werden. Ferner kann auf einen unterschiedlichen Kühlbedarf des Oberfachs 110 und des Trolleyfachs 112 reagiert werden.

Wie insbesondere aus Figur 2 ersichtlich wird, ist der Kondensator 14 separat von den Verdampfern 16a, 16b in einem Kondensatorgehäuse 28 aufgenommen. Neben dem Kondensator 14 sind in dem Kondensatorgehäuse 18 auch der Kompressor 18, die erste Fördereinrichtung 22 und die Steuereinheit 27 untergebracht. Für jeden der Verdampfer 16a, 16b ist ein separat von dem Kondensatorgehäuse 28 ausgebildetes Verdampfergehäuse 30a, 30b vorgesehen, in dem neben dem jeweiligen Verdampfers 16a, 16b auch die dem Verdampfer 16a, 16b zugeordnete zweite Fördereinrichtung 24a, 24b und das dem Verdampfer 16a, 16b zugeordnete Expansionsventil 20a, 20b angeordnet sind.

Im Bereich einer rückwärtigen Außenfläche des Kondensatorgehäuses 28 sind zwei Kühlkreislaufanschlüsse 32, 34 zum Anschluss des in dem Kondensatorgehäuse 28 aufgenommenen Kondensators 14 an den Kühlkreislauf 12 der Kühlanordnung 10 vorgesehen. Ein Kondensatorzuleitungsanschluss 32 dient der Zufuhr des beim Durchströmen der Verdampfer 16a, 16b erwärmten Kühlmediums zu dem Kondensator 14 und ein Kondensatorableitungsanschluss 34 dient der Abfuhr des beim Durchströmen des Kondensators 14 gekühlten Kühlmediums von dem Kondensator 14 in Richtung der Verdampfer 16a, 16b.

Ferner ist im Bereich der rückwärtigen Außenfläche des Kondensatorgehäuses 28 ein elektrischer Anschluss 36 zum Anschluss der in dem Kondensatorgehäuse 28 aufgenommenen Steuereinheit 27 an ein in Figur 2 lediglich schematisch veranschaulichtes elektrisches Netz 38 angeordnet. Das elektrische Netz 38 dient der Versorgung der Steuereinheit 27 mit elektrischer Energie. Ferner werden der Steuereinheit 27 über das elektrische Netz 38 Eingabesignale, beispielsweise Signale, die für den Betriebszustand der Kühlanordnung 10 und/oder den Kühlbedarf des Oberfachs 110 und des Trolleyfachs 112 charakteristisch sind, zugeführt. Darüber hinaus können über den elektrischen Anschluss 36 Steuersignale der Steuereinheit 27 ausgegeben und über das elektrische Netz 38 beispielsweise den Ventilen 20a, 20b und/oder den Fördereinrichtungen 24a, 24b zugeführt werden. Es versteht sich, dass die Steuereinheit 27 auch an die, gemeinsam mit der Steuereinheit 27 in dem Kondensatorgehäuse 28 angeordnete erste Fördereinrichtung 22 Steuersignale ausgeben kann.

Das Kondensatorgehäuse 28 ist in einem ersten Einbauraum 40 angeordnet, der einen ersten Teilbereich der Bordküche 100 bildet. In dem in Figur 1 gezeigten Ausführungsbeispiel einer Bordküche 100 bildet der erste Einbauraum 40 einen rückwärtigen Bereich eines oberhalb der Arbeitsplatte 106 vorgesehenen ungekühlten Standardbordküchenfachs 114. Die die Verdampfer 16a, 16b aufnehmenden Verdampfergehäuse 30a, 30b sind dagegen in einem von dem ersten Einbauraum 40 räumlich getrennten zweiten Einbauraum 42 angeordnet, der einen zweiten Teilbereich der Bordküche 100 bildet. Der zweite Einbauraum 42 ist in einen ersten Einbauteilraum 42a und einen räumlich von dem ersten Einbauteilraum 42a getrennten zweiten Einbauteilraum 42b unterteilt.

Insbesondere befindet sich bei der in der Figur 1 veranschaulichten Bordküche 100 der erste Einbauteilraum 42a unmittelbar benachbart zu einer Rückwand des zu kühlenden Oberfachs 110. Alternativ dazu wäre es jedoch auch denkbar, den zweiten Einbauteilraum 42a in das Oberfach 110 zu integrieren, so dass der erste Einbauteilraum 42a einen Teilbereich des Oberfachs 110 bildet und das den ersten Verdampfer 16a aufnehmende Verdampfergehäuse 30a in dem Oberfach 110 aufgenommen ist. Der zweite Einbauteilraum 42b bildet dagegen einen Teilbereich des Trolleyfacsh 112, d.h. das den zweiten Verdampfer 16b aufnehmende Verdampfergehäuse 30b ist benachbart zu einer Rückwand des Trolleyfachs 112 in das Trolleyfach 112 integriert.

## Patentansprüche

1. Bordküche (100) zur Installation in einem Verkehrsmittel aufweisend eine Kühlanordnung (10), die einen von einem Kühlmedium durchströmbaren Kühlkreislauf (12) umfasst, in dem ein Kondensator (14) und ein Verdampfer (16a, 16b) angeordnet sind,
**dadurch gekennzeichnet, dass**
der Kondensator (14) in einem Kondensatorgehäuse (28) aufgenommen und in einem ersten Einbauraum (40) angeordnet ist, der dazu eingerichtet ist, einen ersten Teilbereich der Bordküche (100) zu bilden, und
der Verdampfer (16a, 16b) in einem separat von dem Kondensatorgehäuse (28) ausgebildeten Verdampfergehäuse (30a, 30b) aufgenommen und in einem zweiten Einbauraum (42) angeordnet ist, der dazu eingerichtet ist einen zweiten Teilbereich der Bordküche (100) zu bilden,
wobei der von dem ersten Einbauraum (40) gebildete erste Teilbereich der Bordküche (100) und der von dem zweiten Einbauraum (42) gebildete zweite Teilbereich der Bordküche (100) räumlich voneinander getrennte Teilbereiche der Bordküche (100) sind,
wobei der erste Einbauraum (40) der Kühlanordnung (10) einen Bereich, insbesondere einen rückwärtigen Bereich, eines oberhalb einer Arbeitsplatte (106) der Bordküche (100) angeordneten ersten Bordküchenfachs (114) bildet
wobei die Bordküche (100) ein unterhalb der Arbeitsplatte (106) der Bordküche (100) angeordnetes, zu kühlendes Trolleyfach (112) aufweist, wobei der zweite Einbauraum (42) der Kühlanordnung (10) benachbart zu dem Trolleyfach (112) angeordnet oder in das Trolleyfach (112) integriert ist, oder
wobei die Bordküche (100) ein oberhalb der Arbeitsplatte (106) der Bordküche (100) angeordnetes, zu kühlendes zweites Bordküchenfach (110) aufweist,
wobei
der zweite Einbauraum (42) der Kühlanordnung (10) benachbart zu dem zweiten Bordküchenfach (110) angeordnet oder in das zweite Bordküchenfach (110) integriert ist

2. Bordküche (100) nach Anspruch 1,
wobei die Kühlanordnung ferner umfasst:
- einen Kompressor (18),
- eine erste Fördereinrichtung (22), die dazu eingerichtet ist, ein erstes Fluid durch den Kondensator (14) zu fordern, das dazu eingerichtet ist, Warme von dem den Kondensator (14) durchströmenden Kühlmedium aufzunehmen,
- eine zweite Fördereinrichtung (24a, 24b), die dazu eingerichtet ist, ein zweites Fluid durch den Verdampfer (16a, 16b) zu fördern, das dazu eingerichtet ist, Wärme an das den Verdampfer (16a, 16b) durchströmenden Kühlmedium abzugeben, und/oder
- ein insbesondere in Form eines Expansionsventils ausgebildetes Ventil (20a, 20b), das dazu eingerichtet ist, einen Volumenstrom des Kühlmediums durch den Kühlkreislauf (12) der Kühlanordnung (10) zu steuern.

3. Bordküche (100) nach Anspruch 2,
wobei der Kompressor (18) und/oder die erste Fördereinrichtung (22) in dem Kondensatorgehäuse (28) angeordnet ist/sind.

4. Bordküche (100) nach Anspruch 2 oder 3,
wobei die zweite Fördereinrichtung (24a, 24b) und/oder das Ventil (20a, 20b) in dem Verdampfergehäuse (30a, 30b) angeordnet ist/sind.

5. Bordküche (100) nach einem der Anspruche 1 bis 4,
die eine Mehrzahl von in dem Kühlkreislauf (12) der Kühlanordnung (10) angeordneten Verdampfern (16a, 16b) umfasst, die jeweils separat von dem Kondensator (14) in dem zweiten Einbauraum (42) angeordnet sind, wobei jedem Verdampfer (16a, 16b) vorzugsweise ein insbesondere in Form eines Expansionsventils ausgebildetes Ventil (20a, 20b) zugeordnet ist, das dazu eingerichtet ist, einen Volumenstrom des Kühlmediums zu dem Verdampfer (16a, 16b) zu steuern.

6. Bordküche (100) nach Anspruch 5,
bei der der zweite Einbauraum (42) in eine Mehrzahl von zweiten Einbauteilräumen (42a) unterteilt ist, die jeweils separat voneinander ausgebildet und zur Aufnahme mindestens eines Verdampfers (16a, 16b) geeignet sind.

7. Bordküche (100) nach einem der Anspruche 1 bis 6,
die ferner eine Steuereinheit (27) zur Steuerung des Betriebs der Kühlanordnung (10) umfasst, wobei die Steuereinheit (27) insbesondere in dem Kondensatorgehäuse (28) angeordnet ist.

8. Bordküche (100) nach Anspruch 5 oder 6 und Anspruch 7,
wobei die Steuereinheit (27) dazu eingerichtet ist, eine Kühlleistung der Verdampfer (16a, 16b) unabhängig voneinander zu steuern.

9. Bordküche (100) nach einem der Anspruche 1 bis 8,
wobei im Bereich einer Außenfläche des Kondensatorgehäuses (28) mindestens ein Kühlkreislaufanschluss (32, 34) zum Anschluss des in dem Kondensatorgehäuse (28) aufgenommenen Kondensators (14) an den Kühlkreislauf (12) der Kühlanordnung (10) und/oder ein elektrischer Anschluss (36) zum Anschluss der in dem Kondensatorgehäuse (28) aufgenommen Steuereinheit (27) an ein elektrisches Netz (38) angeordnet ist/sind.

## Claims

1. Galley (10) for installation in a means of transport, having a cooling arrangement which comprises a cooling circuit (12) adapted to be flown through with a cooling medium and in which a condenser (14) and an evaporator (16a, 16b) are arranged,
**characterised in that**
the condenser (14) is received in a condenser housing (28) and arranged in a first installation space (40) adapted to form a first sub-area of the galley (100), and
the evaporator (16a, 16b) is received in an evaporator housing (30a, 30b) formed separately from the condenser housing (28) and is arranged in a second installation space (42) adapted to form a second sub-area of the galley (100),
wherein the first sub-area of the galley (100) formed by the first installation space (40) and the second sub-area of the galley (100) formed by the second installation space (42) are spatially separate sub-areas of the galley (100),
wherein the first installation space (40) of the cooling arrangement (10) forms a region, in particular a rear region, of a first galley compartment (114) arranged above a worktop (106) of the galley (100),
wherein the galley (100) has a trolley compartment (112) to be cooled which is arranged below the worktop (106) of the galley (100), wherein the second installation space of the cooling arrangement (10) is arranged adjacent to the trolley compartment (112) or integrated into the trolley compartment, or
wherein the galley (100) comprises a second galley compartment (110) to be cooled which is arranged above the galley worktop (106),
wherein the second installation space (42) of the cooling arrangement (10) is arranged adjacent to the second galley compartment (110) or integrated into the second galley compartment (110).

2. Galley (100) according to claim 1,
wherein the cooling arrangement further comprises:
- a compressor (18),
- a first conveying means (22) adapted to convey a first fluid through the condenser (14) which is adapted to absorb heat from the cooling medium flowing through the condenser (14),
- a second conveying means (24a, 24b) adapted to convey a second fluid through the evaporator (16a, 16b) which is adapted to release heat to the cooling medium flowing through the evaporator (16a, 16b), and/or
- a valve (20a, 20b), in particular in the form of an expansion valve, which is adapted to control a volume flow of the cooling medium through the cooling circuit (12) of the cooling arrangement (10).

3. Galley (100) according to claim 2,
wherein the compressor (18) and/or the first conveying means (22) is/are arranged in the condenser housing (28).

4. Galley (100) according to claim 2 or 3,
wherein the second conveying means (24a, 24b) and/or the valve (20a, 20b) is/are arranged in the evaporator housing (30a, 30b).

5. Galley (100) according to any one of claims 1 to 4,
which comprises a plurality of evaporators (16a, 16b) which are arranged in the cooling circuit (12) of the cooling arrangement (10) and are each arranged separately from the condenser (14) in the second installation space (42), each evaporator (16a, 16b) preferably being assigned a valve (20a, 20b), in particular in the form of an expansion valve, which is adapted to control a volumetric flow of the cooling medium to the evaporator (16a, 16b).

6. Galley (100) according to claim 5,
wherein the second installation space (42) is divided into a plurality of second installation sub-spaces (42a) which are each formed separately from one another and are suitable for accommodating at least one evaporator (16a, 16b).

7. Galley (100) according to any one of claims 1 to 6,
further comprising a control unit (27) for controlling the operation of the cooling arrangement (10), wherein the control unit (27) in particular is arranged in the condenser housing (28).

8. Galley (100) according to claim 5 or 6 and claim 7,
wherein the control unit (27) is arranged to control a cooling capacity of the evaporators (16a, 16b) independently of each other.

9. Galley (100) according to any one of claims 1 to 8,
wherein at least one cooling circuit connection (32, 34) for connecting the condenser (14) accommodated in the condenser housing (28) to the cooling circuit (12) of the cooling arrangement (10) and/or an electrical connection (36) for connecting the control unit (27) accommodated in the condenser housing (28) to an electrical network (38) is/are arranged in the region of an outer surface of the condenser housing (28).

## Revendications

1. Cuisine de bord (100) destinée à être installée dans un moyen de transport, comprenant un ensemble de refroidissement (10) qui comprend un circuit de refroidissement (12) à travers lequel peut s'écouler un milieu de refroidissement et dans lequel sont disposés un condenseur (14) et un évaporateur (16a, 16b),
**caractérisée en ce que**
le condenseur (14) est reçu dans un boîtier de condenseur (28) et est disposé dans un premier espace de logement (40) qui est conçu pour former une première zone partielle de la cuisine de bord (100), et
l'évaporateur (16a, 16b) est reçu dans un boîtier d'évaporateur (30a, 30b) formé séparément du boîtier de condenseur (28) et disposé dans un deuxième espace de logement (42) qui est conçu pour former une deuxième zone partielle de la cuisine de bord (100),
dans laquelle la première zone partielle de la cuisine de bord (100) formée par le premier espace de logement (40) et la deuxième zone partielle de la cuisine de bord (100) formée par le deuxième espace de logement (42) sont des zones partielles de la cuisine de bord (100) séparées spatialement l'une de l'autre,
dans laquelle le premier espace de logement (40) de l'ensemble de refroidissement (10) forme une zone, en particulier une zone arrière, d'un premier compartiment de cuisine de bord (114) disposé au-dessus d'un plan de travail (106) de la cuisine de bord (100),
dans laquelle la cuisine de bord (100) présente un compartiment de chariot (112) à refroidir, disposé au-dessous du plan de travail (106) de la cuisine de bord (100), le deuxième espace de logement (42) de l'ensemble de refroidissement (10) étant disposé au voisinage du compartiment de chariot (112) ou étant intégré dans le compartiment de chariot (112), ou
dans laquelle la cuisine de bord (100) présente un deuxième compartiment de cuisine de bord (110) à refroidir, disposé au-dessus du plan de travail (106) de la cuisine de bord (100), le deuxième espace de logement (42) de l'ensemble de refroidissement (10) étant disposé au voisinage du deuxième compartiment de cuisine de bord (110) ou étant intégré dans le deuxième compartiment de cuisine de bord (110).

2. Cuisine de bord (100) selon la revendication 1,
dans laquelle l'ensemble de refroidissement comprend en outre :
- un compresseur (18),
- un premier moyen de transport (22) conçu pour transporter un premier fluide à travers le condenseur (14), ledit fluide étant conçu pour recevoir de la chaleur du milieu de refroidissement s'écoulant à travers le condenseur (14),
- un deuxième moyen de transport (24a, 24b) conçu pour transporter un deuxième fluide à travers l'évaporateur (16a, 16b), ledit fluide étant conçu pour céder de la chaleur au milieu de refroidissement s'écoulant à travers l'évaporateur (16a, 16b), et/ou
- une vanne (20a, 20b) réalisée en particulier sous la forme d'une vanne de détente et conçue pour commander un débit volumique du milieu de refroidissement à travers le circuit de refroidissement (12) de l'ensemble de refroidissement (10).

3. Cuisine de bord (100) selon la revendication 2,
dans laquelle le compresseur (18) et/ou ledit premier moyen de transport (22) est/sont disposé(s) dans le boîtier de condenseur (28).

4. Cuisine de bord (100) selon la revendication 2 ou 3,
dans laquelle le deuxième moyen de transport (24a, 24b) et/ou la vanne (20a, 20b) est/sont disposé(s) dans le boîtier d'évaporateur (30a, 30b).

5. Cuisine de bord (100) selon l'une des revendications 1 à 4,
comprenant une pluralité d'évaporateurs (16a, 16b) disposés dans le circuit de refroidissement (12) de l'ensemble de refroidissement (10), qui sont chacun disposés séparément du condenseur (14) dans le deuxième espace de logement (42), une vanne (20a, 20b) réalisée en particulier sous la forme d'une vanne de détente et conçue pour commander un débit volumique du milieu de refroidissement vers l'évaporateur (16a, 16b) étant de préférence associée à chaque évaporateur (16a, 16b).

6. Cuisine de bord (100) selon la revendication 5,
dans laquelle le deuxième espace de logement (42) est divisé en une pluralité de deuxièmes espaces partiels de logement (42a) formés séparément les uns des autres et adaptés à recevoir chacun au moins un évaporateur (16a, 16b).

7. Cuisine de bord (100) selon l'une des revendications 1 à 6,
comprenant en outre une unité de commande (27) pour commander le fonctionnement de l'ensemble de refroidissement (10), l'unité de commande (27) étant disposée en particulier dans le boîtier de condenseur (28).

8. Cuisine de bord (100) selon la revendication 5 ou 6 et la revendication 7,
dans laquelle l'unité de commande (27) est conçue pour commander une puissance de refroidissement des évaporateurs (16a, 16b) de façon indépendante les uns des autres.

9. Cuisine de bord (100) selon l'une des revendications 1 à 8,
dans laquelle au moins un raccord de circuit de refroidissement (32, 34) pour raccorder le condenseur (14) reçu dans le boîtier de condenseur (28) au circuit de refroidissement (12) de l'ensemble de refroidissement (10) et/ou un raccord électrique (36) pour raccorder l'unité de commande (27) reçue dans le boîtier de condenseur (28) à un réseau électrique (38) est/sont disposé(s) dans la zone d'une surface extérieure du boîtier de condenseur (28).
